# EUROPÄISCHE PATENTANMELDUNG

(11) **EP 0 742 498 A2**
(43) Veröffentlichungstag der Anmeldung: **13.11.1996**
(21) Anmeldenummer: 96107437.4
(22) Anmeldetag: 10.05.1996
(51) Int. Cl.: G05B 19/042

(54) **Einbeziehen von einkanaligem Programmcode in eine zweikanalige sicherheitsgerichtete Systemstruktur**

(30) Priorität: 11.05.1995 DE 19517377
(71) Anmelder: SIEMENS AKTIENGESELLSCHAFT, 80333 München (DE)
(72) Erfinder: Hertinger, Klaus Ing.(FH), 91056 Erlangen (DE); Schmittele, Max Dipl.-Ing., 91058 Erlangen (DE)

(57) **Zusammenfassung**

Es wird eine sicherheitsgerichtete zweikanalige Systemstruktur (S) geschaffen, welche es ermöglicht unsicheren einkanaligen Programmcode (C) mitzunutzen und dabei trotzdem die erhöhte Sicherheit der zweikanaligen Systemstruktur (S) beizubehalten. Dazu wird der einkanalige Programmcode (C) von einem Funktionsbaustein (F1) zur sicheren Signalverarbeitung des Kanals (K1) gestartet und gleichzeitig werden in beiden Kanälen (K1,K2) in den darin vorgesehenen Funktionsbausteinen (F1,F2) Überwachungsfunktion (U1,U2) ausgeführt, bei denen gleichzeitig ein zyklischer kreuzweiser Daten- und Ergebnisvergleich vorgenommen wird. Anschließend wird in beiden Kanälen der Prozeßzustand (P) gelesen und bei Auftreten eines Fehlers eine projektierbare Fehlerreaktion ausgelöst.

## Beschreibung

Die Erfindung betrifft ein Verfahren sowie eine zweikanalige sicherheitsgerichtete Systemstruktur zum Einbeziehen von einkanaligem Programmcode.

Auch in zweikanaligen sicherheitsgerichteten Systemstrukturen, in welchen Bearbeitungsbläufe bzw. Prozeßschritte redundant in mehreren Kanälen unabhängig voneinander vorgenommen werden können, stellt sich häufig die Anforderung, auch unsichere einkanalige Programmschritte abzuarbeiten, wodurch in der Regel das Maß an ereichbarer Sicherheit beeinträchtigt wird. Ein Beispiel für einen solchen einkanaligen Programmcode, welcher in einer zweikanaligen sicherheitsgerichteten Systemstruktur abgearbeitet werden muß, kann am Beispiel einer numerisch gesteuerten Werkzeugmaschine gegeben werden.

Eine zweikanalige sicherheitsgerichtete Systemstruktur besteht beispielsweise aus der numerischen Steuerung auf der einen Seite und einer Antriebssteuerung auf der anderen Seite. Beide stellen jeweils einen Kanal dar. Ein interpolatorisches Stillsetzen und Rückziehen der beteiligten Antriebe im Verbund stellt nun einen einkanaligen Programmcode dar, der aufgrund der Aufgabenverteilung bei numerisch gesteuerten Werkzeugmaschinen lediglich auf der Seite der numerischen Steuerung vorhanden ist. So läuft auf dem Kanal der numerischen Steuerung das Ausführen von Verfahrprogrammen und die Interpolation aller beteiligten Antriebe ab, während auf dem Kanal der Antriebssteuerung eine Drehzahl- und Stromregelung der Motor erfolgt.

Herkömmlicherweise wurde dieses Problem der Einbeziehung eines einkanaligen und sicheren Programmcodes dadurch gelöst, daß die Programmschritte in konventioneller Technik umgesetzt wurden. Dazu wurden Schütztechnik oder sicherheitsrelevante Schaltkreise eingesetzt.

Eine andere herkömmliche Maßnahme bestand darin, daß auf einkanaligen umfangreichen Programmcode gänzlich verzichtet wurde.

Eine Alternative dazu besteht darin, den einkanaligen unsicheren Programmcode aufwendig in beiden Kanälen der zweikanaligen sicherheitsgerichteten Systemstruktur umzusetzen. Letzteres ist jedoch mit großem Arbeits- und Entwicklungsaufwand verbunden, da hierzu ein komplettes Umschreiben des einkanaligen Programmcodes erforderlich wird.

Aufgabe der vorliegenden Erfindung ist es daher, ein Verfahren zu schaffen, welches es ermöglicht, auch unsicheren einkanaligen Programmcode so in eine sicherheitsgerichtete zweikanalige Systemstruktur zu integrieren, daß solche einkanalig vorhandene Codeteile mitbenutzt werden können. Dabei soll auf kostenintensive Maßnahmen in konventioneller Technik sowie auf arbeitsintensives Umsetzen der einkanaligen Programmteile in beiden Kanäle verzichtet werden. Die Sicherheit der zweikanaligen Systemstruktur jedoch soll auch bei der Abarbeitung von unsicherem einkanaligem Programmcode beibehalten werden.

Gemäß der vorliegenden Erfindung wird diese Aufgabe durch ein Verfahren mit den folgenden Verfahrensschritten gelöst:
1.1 in einem Kanal der zweikanaligen sicherheitsgerichteten Systemstruktur wird der einkanalige Programmcode aufgerufen,
1.2 gleichzeitig wird in beiden Kanälen jeweils eine Überwachungsfunktion gestartet,
1.3 zwischen den beiden Überwachungsfunktionen wird zyklisch ein kreuzweiser Datenvergleich und/oder Ergebnisvergleich durchgeführt,
1.4 nach Ausführung beider Überwachungsfunktionen wird das Ergebnis oder der ordentliche Ablauf des einkanaligen Programmcodes in beiden Kanälen unabhängig voneinander durch Lesen des Prozeßzustandes überprüft,
1.5 werden so Inkonsistenzen zwischen den beiden Kanälen erkannt, so wird eine projektierbare Fehlerreaktion ausgelöst.
   In einer ersten vorteilhaften Ausgestaltung des Verfahrens gemäß der vorliegenden Erfindung wird erreicht, daß für die vorgesehenen Überwachungsfunktionen eine besonders einfache und effektive Maßnahme ergriffen wird, welche mit geringem Aufwand zu realisieren ist, jedoch eine sichere Überwachung des einkanaligen Programmcodes gewährleistet. Dies geschieht durch folgenden weiteren Verfahrensschritt:
2.1 als Überwachungsfunktionen werden Timerfunktionen ausgeführt, welche auf eine fest hinterlegte, dem einkanaligen Programmcode zugeordnete Zeit voreingestellt und mit Aufruf des einkanaligen Programmcodes gestartet werden.
   In einer alternativen vorteilhaften Ausgestaltung des Verfahrens gemäß der vorliegenden Erfindung wird erreicht, daß für die vorgesehenen Überwachungsfunktionen aufwendigere, aber auch sicherere Maßnahmen ergriffen werden, was vor allem für die Ausführung von besonders kritischem einkanaligem Programmcode von Bedeutung ist. Dies wird durch folgenden weiteren Verfahrensschritt erreicht:
3.1 als Überwachungsfunktionen werden Plausibilitätsüberprüfungen ausgeführt.
   Um ein solches vorteilhaftes Verfahren gemäß der vorliegenden Erfindung auf besonders einfache Art und Weise durchführen zu können, wird desweiteren eine besonders gestaltete zweikanalige sicherheitsgerichtete Systemstruktur geschaffen, welche das Einbeziehen von unsicherem einkanaligem Programmcode ermöglicht. Diese Systemstruktur weist folgende Merkmale auf:
4.1 es ist für jeden Kanal ein Funktionsbaustein zur sicheren Signalverarbeitung vorgesehen, wobei in jedem davon eine Überwachungsfunktion ausführbar ist,
4.2 in einem Kanal der zweikanaligen sicherheitsgerichteten Systemstruktur ist der einkanalige Programmcode aufrufbar,
4.3 es sind Mittel zum zyklischen kreuzweisen Datenvergleich und/oder Ergebnisvergleich zwischen den beiden Funktionsbausteinen zur sicheren Signalverarbeitung vorgesehen,
4.4 es sind weitere Mittel zum Lesen des Prozeßzustandes nach Ausführung beider Überwachungsfunktionen vorgesehen, wobei das Ergebnis oder der ordentliche Ablauf des einkanaligen Programmcodes in beiden Kanälen unabhängig voneinander überprüfbar ist,
4.5 es sind projektierbare Fehlerreaktionen vorgesehen, welche im Falle von Inkonsistenzen zwischen den beiden Kanälen auslösbar sind.
   In einer ersten vorteilhaften Ausgestaltung der Systemstruktur gemäß der vorliegenden Erfindung werden die Funktionsbausteine durch ein besonders preisgünstiges und flexibles Element realisiert. Dies geschieht durch folgendes weiteres Merkmal:
5.1 die beiden Funktionsbausteine zur sicheren Signalverarbeitung sind als Mikroprozessoren ausgestaltet.
   In einer weiteren vorteilhaften Ausgestaltung der Systemstruktur gemäß der vorliegenden Erfindung werden die Überwachungsfunktionen durch eine besonders effektive, da einfach zu realisierende und zu handhabende Elemente ausgebildet. Dies geschieht durch folgendes weiteres Merkmal:
6.1 als Überwachungsfunktionen sind Timerelemente vorgesehen, welche auf eine fest hinterlegte, dem einkanaligen Programmcode zugeordnete Zeit voreinstellbar und mit Aufruf des einkanaligen Programmcodes aktivierbar sind.
   In einer weiteren vorteilhaften Ausgestaltung der Systemstruktur gemäß der vorliegenden Erfindung wird erreicht, daß die Überwachungsfunktionen der Systemstruktur besonders flexibel und besonders sicher arbeiten, was diese Ausgestaltung besonders für sicherheitskritischen einkanaligen Programmcode sinnvoll macht. Dies geschieht durch folgendes weiteres Merkmal:
7.1 als Überwachungsfunktionen sind Elemente zur Durchführung einer Plausibilitätsprüfung vorgesehen.

Einer Anwendung der Systemstruktur gemäß der vorliegenden Erfindung werden deren Vorteile vor allem bei mit sicherheitskritischen Funktionen behafteten numerisch gesteuerten Werkzeugmaschinen, Robotern oder ähnlichen Sondernmaschinen eingesetzt. Dadurch läßt sich die Sicherheit der genannten Maschinen beträchtlich erhöhen.

Weitere Einzelheiten und Vorteile ergeben sich aus der nachfolgenden Schilderung eines Ausführungsbeispiels sowie anhand der Figur und in Verbindung mit den Unteransprüchen. Es zeigt dabei im einzelnen:

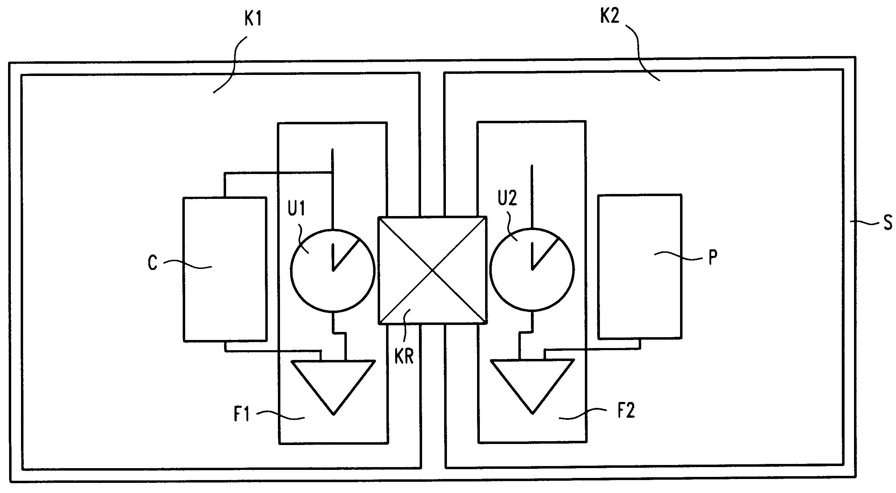

- FIG 1: eine zweikanalige sicherheitsgerichtete Systemstruktur mit Möglichkeit zur Integration von einkanaligem Programmcode.

In der Darstellung gemäß FIG 1 ist eine sicherheitsgerichtete Systemstruktur S gezeigt, welche zweikanalig mit den Kanälen K1 und K2 aufgebaut ist. Jedem Kanal K1 und K2, welche unabhängig voneinander sind, ist jeweils ein Funktionsbaustein F1 bzw. F2 zur sicheren Signalverarbeitung zugeordnet. Die sicherheitsgerichtete Systemstruktur S besitzt in beiden Kanälen K1 und K2 durch die Funktionsbausteine F1 und F2 zur sicheren Signalverarbeitung eine Erwartungshaltung, um den regulären Ablauf von unsicherem einkanaligem Programmcode C zu überprüfen.

Ein Kanal - im vorliegenden Ausführungsbeispiel ist dies Kanal K1 - ruft den unsicheren einkanaligen Programmcode C auf, was im Funktionsbaustein F1 geschieht. Dies ist in der Darstellung gemäß FIG 1 dargestellt, indem der einkanalige Programmcode C vom Funktionsbaustein F1 angesteuert und somit die Abarbeitung gestartet wird. Gleichzeitig wird das Ergebnis des Programmcodes C über eine angedeutete Verbindung wieder in den Funktionsbaustein F1 rückgeführt.

Beide Funktionsbausteine F1 und F2 zur sicheren Signalverarbeitung weisen je eine Überwachungsfunktion U1 und U2 auf. Im vorliegenden Ausführungsbeispiel gemäß der Darstellung nach FIG 1 ist diese Überwachungsfunktion in Form einer Timerfunktion ausgestaltet. Dies ist durch die in Form einer Uhr dargestellten Funktionsblöcke U1 und U2 veranschaulicht. Die in den Funktionsbausteinen F1 bzw. F2 befindlichen Timerüberwachungsfunktionen U1 und U2 werden in beiden Kanälen gleichzeitig mit dem unsicheren einkanaligen Programmcode C gestartet. Nach einer fest hinterlegten Zeit wird das Ergebnis oder der ordentliche Ablauf des einkanaligen Programmcodes C in beiden Kanälen K1 bzw. K2 voneinander unabhängig durch Lesen des Prozeßzustandes P überprüft und bei Fehlern eine projektierbare Fehlerreaktion aufgerufen bzw. ausgelöst. Desweiteren führen beide Funktionsbausteine F1 bzw. F2 zur sicheren Signalverarbeitung zyklisch einen kreuzweisen Daten- und Ergebnisverlgeich durch, was durch eine entsprechende Funktionseinheit KR veranschaulicht ist, welche die beiden Funktionsbausteine F1 und F2 verbindet.

Im Falle der Ausgestaltung der Überwachungsfunktionen U1 und U2 als Timerfunktionen besteht dieser zyklische kreuzweise Daten- und Ergebnisvergleich im gegenseitigen Vergleichen der beiden Timerwerte (Datenvergleich) oder dem Vergleichen des Ergebnisses 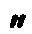 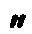 einkanaliger Codeteil liefert erwartetes Ergebnis oder nicht" (Ergebnisvergleich).

Durch diese Maßnahme werden schlafende Fehler, wie beispielsweise das Kippen von Datenbits oder Codebits in beiden Kanälen K1 und K2 sicher aufgedeckt. Solche schlafende Fehler besitzen die unangenehme Eigenschaft, daß das Vorhandensein eines solchen Fehlers ohne Sicherheitsmaßnahmen, wie sie im vorangehenden geschildert wurden und der vorliegenden Erfindung zugrundeliegen, schon lange vorliegen können, bevor sie sich auswirken. Erst mit Zugriff auf eine solche mit einem schlafenden Fehler behaftete Funktion tritt dann der Fehler selbst auf.

Mit den im vorangehenden geschilderten, der vorliegenden Erfindung zugrundeliegenden Maßnahmen und Funktionselementen werden solche schlafende Fehler sicher erkannt und somit werden deren Auswirkungen vermieden, da die Fehler bereits aufgedeckt werden können, bevor die mit einem solchen schlafenden Fehler behafteten Funktionen tatsächlich ausgeführt werden.

Auf diese Art und Weise wird die Einbeziehung von unsicherem einkanaligen Programmcode C in sicherheitsgerichtete Systemstrukturen S ermöglicht.

Eine alternative Ausgestaltung der Überwachungsfunktion U1 und U2 besteht neben den Timerfunktionen in der Durchführung von Plausibilitätsüberprüfungen. Dazu werden die Überwachungsfunktionen U1 und U2 in den Funktionsbaustein F1 und F2 zur sicheren Signalverarbeitung, welche beispielsweise als geeignet programmierte Mikroprozessoren ausgestaltet sein können, ebenfalls mit dem Start des unsicheren einkanaligen Programmcodes C in einem Kanal, wie beispielsweise Kanal K1, aktiviert. Durch voneinander unabhängige Plausibilitätsüberprüfungen in beiden Kanälen K1 und K2 wird das Ergebnis oder der ordentliche Ablauf des einkanaligen Programmcodes C in beiden Kanälen K1 und K2 unabhängig voneinander durch Lesen des Prozeßzustandes P überprüft und bei Fehlern eine projektierbare Fehlerreaktion aufgerufen bzw. ausgelöst. Ein zyklischer kreuzweiser Datenvergleich und Ergebnisvergleich wird ebenfalls vorgenommen. Das Lesen des Prozeßzustandes P erfolgt für den Kanal K1, in dem der einkanalige und sichere Progorammcode C ausgeführt wird, anhand des Ergebnisses des Programmcodes C, welcher in den Funktionsbaustein F1 rückgeführt wird, während in dem anderen Kanal K2, in welchem der unsichere einkanalige Programmcode C nicht ausgeführt wird, lediglich der Prozeßzustand P selbst abgefragt wird. Durch die zyklischen kreuzweisen Daten- und Ergebnisvergleiche mittels der Funktionseinheit KR und der ständigen Überprüfungen auf Plausibilität wird eine noch höhere Sicherheit erreicht, als bei den als Timerfunktionen ausgestalteten Überwachungsfunktionen U1 und U2. Aus diesem Grund ist der Einsatz der Plausibilitätsüberprüfungen vor allem bei sicherheitskritischen einkanaligen Programmcodes geraten.

Ein konkretes Anwendungsbeispiel der geschilderten sicherheitsgerichteten zweikanaligen Systemstruktur S gemäß der vorliegenden Erfindung kann anhand einer numerisch gesteuerten Werkzeugmaschine angeführt werden. Durch Überschreiten eines sicher überwachten Geschwindigkeitsgrenzwertes soll eine projektierte Stopp-Reaktion der Werkzeugmaschine ausgeführt werden. Diese Stopp-Reaktion umfaßt ein von der numerischen Steuerung geführtes interpolatorisches Stillsetzen und Rückziehen der beteiligten Antriebe im Verbund. Dies stellt einen einkanaligen Codeteil dar, welcher aufgrund der Aufgabenverteilung bei Werkzeugmaschinen-Steuerungen nur auf Seiten der numerischen Steuerung vorhanden ist. Auf Seiten der numerischen Steuerung, welche beispielsweise den Kanal K1 einnehmen soll, werden Verfahrprogramme und Interpolationen aller beteiligten Antriebe ausgeführt. Der andere Kanal K2 ist einer Antriebssteuerung zugewiesen, in der eine Drehzahl- und Stromregelung der Motor vorgenommen wird.

Mit Erkennen einer Grenzwertüberschreitung soll die Stopp-Reaktion zum Schutz von Personen ausgelöst werden können. Dazu rufen beide Kanäle K1 und K2 die Stopp-Reaktion auf, indem jede Überwachungsfunktion U1 und U2 für sich einen projektierten Timer aufzieht. Der eine Kanal K1 der numerischen Steuerung stößt zusätzlich den unsicheren einkanaligen Programmcodeteil C an. Nach Ablauf der dem einkanaligen Programmcode C zugeordneten fest vorgebbaren Zeit für die Timer wird von jedem Kanal K1 und K2 unabhängig vom anderen der Prozeßzustand P überprüft, indem in eine Überwachung auf sicheren Betriebshalt übergegangen wird. Falls die einkanalige Logik nicht wie erwartet nach der projektierten Zeit der Timer die Antriebe zum Stillstand überführt hat, wird dies erkannt und ein sicheres Abschalten aller Antriebe bewirkt. Somit werden bei Überschreitung des Grenzwertes und bei Ungleichheit der kreuzweisen Ergebnis- oder Maschinendatenvergleiche projektierbare Fehlerreaktionen sicher ausgeführt.

Die vorangehende Beschreibung der bevorzugten Ausführungsform nach der Erfindung ist zum Zwecke der Illustration angegeben. Diese ist nicht erschöpfend bzw. die Erfindung ist nicht auf die genau angegebene Form beschränkt, sondern ist in zahlreicher Modifikation und Änderungen im Rahmen der vorstehend angegebenen Lehre möglich. Die bevorzugte Ausführungsform wurde gewählt und beschrieben, um die prinzipiellen Einzelheiten der Erfindung und die praktischen Anwendungen zu verdeutlichen, so daß ein Fachmann in die Lage versetzt wird, die Erfindung zu realisieren. Jedoch sind zahlreiche bevorzugte Ausgestaltungsformen und weitere Modifikationen bei speziellen Anwendungsgebieten möglich. Der Schutzgedanke der Erfindung soll nur durch die anliegenden Ansprüche bestimmt sein.

## Patentansprüche

1. Verfahren zum Einbeziehen von einkanaligem Programmcode in eine zweikanalige sicherheitsgerichtete Systemstruktur, mit folgenden Verfahrensschritten:
1.1 in einem Kanal (K1 oder K2) der zweikanaligen sicherheitsgerichteten Systemstruktur (S) wird der einkanalige Programmcode (C) aufgerufen,
1.2 gleichzeitig wird in beiden Kanälen (K1,K2) jeweils eine Überwachungsfunktion (U1,U2) gestartet,
1.3 zwischen den beiden Überwachungsfunktionen (U1,U2) wird zyklisch ein kreuzweiser Datenvergleich und/oder Ergebnisvergleich (KR) durchgeführt,
1.4 nach Ausführung beider Überwachungsfunktionen (U1,U2) wird das Ergebnis oder der ordentliche Ablauf des einkanaligen Programmcodes (C) in beiden Kanälen (K1,K2) unabhängig voneinander durch Lesen des Prozeßzustandes überprüft,
1.5 werden so Inkonsistenzen zwischen den beiden Kanälen (K1, K2) erkannt, so wird eine projektierbare Fehlerreaktion ausgelöst.

2. Verfahren nach Anspruch 1, mit folgendem weiteren Verfahrensschritt:
2.1 als Überwachungsfunktionen (U1,U2) werden Timerfunktionen ausgeführt, welche auf eine fest hinterlegte, dem einkanaligen Programmcode (C) zugeordnete Zeit voreingestellt und mit Aufruf des einkanaligen Programmcodes (C) gestartet werden.

3. Verfahren nach Anspruch 1, mit folgendem weiteren Verfahrensschritt:
3.1 als Überwachungsfunktionen (U1,U2) werden Plausibilitätsüberprüfungen ausgeführt.

4. Zweikanalige sicherheitsgerichtete Systemstruktur zum Einbeziehen von einkanaligem Programmcode, mit folgenden Merkmalen:
4.1 es ist für jeden Kanal (K1,K2) ein Funktionsbaustein (F1, F2) zur sicheren Signalverarbeitung vorgesehen, wobei in jedem davon eine Überwachungsfunktion (U1,U2) ausführbar ist,
4.2 in einem Kanal (K1 oder K2) der zweikanaligen sicherheitsgerichteten Systemstruktur (S) ist der einkanalige Programmcode (C) aufrufbar,
4.3 es sind Mittel (KR) zum zyklischen kreuzweisen Datenvergleich und/oder Ergebnisvergleich zwischen den beiden Funktionsbausteinen (F1,F2) zur sicheren Signalverarbeitung vorgesehen,
4.4 es sind weitere Mittel zum Lesen des Prozeßzustandes nach Ausführung beider Überwachungsfunktionen (U1,U2) vorgesehen, wobei das Ergebnis oder der ordentliche Ablauf des einkanaligen Programmcodes (C) in beiden Kanälen (K1,K2) unabhängig voneinander überprüfbar ist,
4.5 es sind projektierbare Fehlerreaktionen vorgesehen, welche im Falle von Inkonsistenzen zwischen den beiden Kanälen (K1,K2) auslösbar sind.

5. Systemstruktur nach Anspruch 4, mit folgendem weiteren Merkmal:
5.1 die beiden Funktionsbausteine (F1,F2) zur sicheren Signalverarbeitung sind als Mikroprozessoren ausgestaltet.

6. Systemstruktur nach Anspruch 4 oder 5, mit folgendem weiteren Merkmal:
6.1 als Überwachungsfunktionen (U1,U2) sind Timerelemente vorgesehen, welche auf eine fest hinterlegte, dem einkanaligen Programmcode (C) zugeordnete Zeit voreinstellbar und mit Aufruf des einkanaligen Programmcodes (C) aktivierbar sind.

7. Systemstruktur nach Anspruch 4 oder 5, mit folgendem weiteren Merkmal:
7.1 als Überwachungsfunktionen (U1,U2) sind Elemente zur Durchführung einer Plausibilitätsprüfung vorgesehen.

8. Numerische Steuerung für eine Werkzeugmaschine, einen Roboter oder dergleichen mit einer zweikanaligen sicherheitsgerichteten Systemstruktur nach einem der Ansprüche 4 bis 7.
